# EUROPEAN PATENT SPECIFICATION

(11) **EP 0 340 797 B1**
(45) Date of publication and mention of the grant of the patent: **16.03.1994**
(21) Application number: 89108188.7
(22) Date of filing: 05.05.1989
(51) Int. Cl.: C08G 18/40, C08G 18/10, C08G 18/70, C08G 18/62

(54) **Curable polymer composition**
Härtbare Polymerzusammensetzung
Composition polymérique réticulable

(30) Priority: 06.05.1988 JP 110971/88
(43) Date of publication of application: 08.11.1989
(73) Proprietor: Kanegafuchi Chemical Industry Co., Ltd., Kita-ku Osaka-shi Osaka-fu (JP)
(72) Inventor: Wakabayashi, Hiroshi, Kobe-shi Hyogo-ken (JP); Hirose, Toshifumi, Kobe-shi Hyogo-ken (JP); Isayama, Katsuhiko, Kobe-shi Hyogo-ken (JP)
(74) Representative: Hansen, Bernd, Dr. Dipl.-Chem.

(56) References cited:
- EP-A- 0 010 758
- DE-A- 2 711 185
- US-A- 4 680 203

## Description

The present invention relates to a curable polymer composition. More particularly, the present invention relates to a curable polymer composition having good transparency and compatibility of component polymers, which composition gives a cured material having good weather resistance.

A curable polymer composition can be used as a sealant for buildings or an elastic adhesive for bonding tiles or siding boards. In such applications, the cured material of curable polymer composition is required to have elastic property which allows expansion and contraction according to thermal dimensional change of construction materials. In addition, preferably the curable polymer composition contains no material which liberates into the air such as water or organic solvents.

As such curable polymer composition, used is a composition comprising a prepolymer which is obtained by reacting polyoxyalkylenepolyol with an organic diisocyanate and has a terminal isocyanate group as a primary component and polyoxyalkylenepolyol or a polyamine as a curing agent.

However, such the polyurethane base composition provides a cured material with insufficient weather resistance so that, on exposure to outdoor atmosphere for a long time, the surface of the cured material is cracked.

A polyacryl base curable composition can provide a cured material with good weather resistance, coloring properties and durability, while such composition has high viscosity and its cured material has no elasticity. Therefore, the polyacryl base curable composition is available in the form of an emulsion or a solution in an organic solvent. When such the polyacryl base curable composition is filled in joints between or used to bond the construction materials, the cured material cannot follow the change of joint width so that the cured material tends to be cracked or spaces tend to be formed as time passes. In addition, the volume of the cured material decreases as time passes. Then, such the composition does not function sufficiently as intended. Accordingly, the polyacryl base curable composition finds only limited application such as bonding ALC boards.

The already proposed curable compositions include a composition comprising polyoxyalkylenepolyol and polyacrylpolyol or a composition comprising a polyoxyalkylene base isocyanate component having a terminal isocyanate group which is prepared by reacting polyoxyalkylenepolyol with an organic diisocyanate compound and a low molecular weight copolymeric isocyanate having at least one isocyanate group in a molecule. However, the composition comprising the component polymer having a molecular weight large enough for exhibiting rubbery elasticity has unsatisfactory compatibility.

EP-A-0 010 758 discloses a polymer composition having an improved 180° peel strength without deterioration of the UV stability. Said composition comprises (A) at least one alkyl acrylate liquid polymer containing both terminal and random hydroxyl functionality, as well as sulfide linkages, (B) at least one prepolymer of a polyester glycol or a polyalkylene ether glycol with an excess amount of an aromatic diisocyanate, and (C) at least one alkanediol having 3 to 10 carbon atoms. Said composition may be used as a pressure-sensitive adhesive.

One object of the present invention is to provide a curable polymer composition a cured material of which has sufficient elasticity to be used as a joint sealant or an adhesive in the constructions.

Another object of the present invention is to provide a curable polymer composition a cured material of which has improved weather resistance.

According to the present invention, there is provided a one pack type moisture curable polymer composition, which comprises: (A) a polyoxyalkylene base isocyanate compound having a terminal isocyanate group which compound is obtainable by reacting polyoxyalkylenepolyol with an organic diisocyanate, and (B) a copolymer having at least one isocyanate group in a molecule on the average, the backbone of which copolymer comprises (1) repeating units derived from at least one monomer selected from alkyl acrylates and alkyl methacrylates represented by the formula: 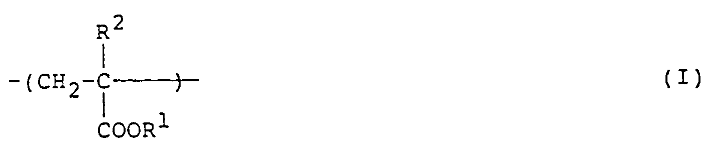
wherein R1 is an alkyl group having 1 to 8 carbon atoms and R2 is a hydrogen atom or a methyl group and (2) repeating units derived from at least one monomer selected from alkyl acrylates and alkyl methacrylates represented by the formula 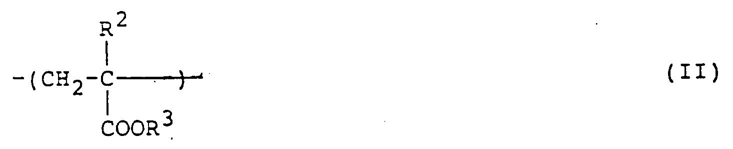
wherein R2 is the same as defined above and R3 is an alkyl group having at least 10 carbon atoms; and (3) optionally repeating units derived from at least one of monomers which are copolymerizable with the repeating units (1) and (2) wherein at least 50% by weight of the repeating units (I) and (II), based on the whole weight of said copolymer, are contained and wherein the weight ratio of the repeating units (I) to the repeating units (II) is from 95:5 to 40:60, wherein the weight ratio of the compound (A) to the compound (B) is from 5:95 to 95:5.

In a preferred embodiment of the present invention, the composition comprises additionally (C) a curing agent comprising (i) polyoxyalkylenepolyol having an average molecular weight of at least 1000 and (ii) a copolymer which has at least one functional group reactive with an isocyanate group in a molecule on the average and an average molecular weight of at least 1000 and a backbone which comprises the repeating units (1) and (2) as defined in claim 1.

The polyoxyalkylene base isocyanate compound (A) may be prepared by reacting polyoxyalkylenepolyol with the organic diisocyanate compound. Polyoxyalkylenepolyol can be prepared by polymerizing a polyhydric alcohol and an alkylene oxide and preferably has an average molecular weight of 500 to 10,000.

Specific examples of the polyhydric alcohol are ethylene glycol, propylene glycol, glycerol, pentaerythritol or trimethylolpropane. Among them, diols such as ethylene glycol and propylene glycol and triols such as glycerol are preferred. The polyhydric alcohols may be used independently or as a mixture thereof.

Specific examples of the alkylene oxide are ethylene oxide, propylene oxide or butylene oxide. They may be used independently or as a mixture thereof.

As the organic diisocyanate which is used to introduce the terminal isocyanate group in polyoxyalkylenepolyol, any of known organic diisocyanates can be used. Preferred examples of diisocyanate are 2,4-tolylene diisocyanate, 2,6-tolylene diisocyanate, 4,4'-diphenylmethane diisocyanate, xylylene diisocyanate, hexamethylene diisocyanate or isophorone diisocyanate. They may be used independently or as a mixture thereof.

The copolymer (B), namely the acrylic isocyanate component may be prepared by polymerizing an unsaturated monomer having a functional group reactive with the isocyanate group, at least one monomer selected from
alkyl acrylates having 1 to 8 carbon atoms in the alkyl group and alkyl methacrylates having 1 to 8 carbon atoms in the alkyl group and at least one monomer selected from alkyl acrylates having at least 10 carbon atoms in the alkyl group and alkyl methacrylates having at least 10 carbon atoms in the alkyl group to produce an acrylic copolymer having at least one functional group reactive with the isocyanate group in a molecule on the average (hereinafter referred to as "copolymer (b)") and then reacting the organic diisocyanate with said acrylic copolymer (b).

As a polymerization initiator, conventionally used peroxide initiators and azo compound initiators can be used.

Alternatively, it is possible to use a polymerization initiator having a functional group reactive with the isocyanate group or a chain transfer agent having a functional group reactive with the isocyanate group instead of the use of the unsaturated monomer having the functional group reactive with the isocyanate group. Further, it may be possible to use the unsaturated monomer having the functional group reactive with the isocyanate group in combination with the polymerization initiator having the functional group reactive with the isocyanate group and/or the chain transfer agent having the functional group reactive with the isocyanate group.

Examples of the polymerization initiator having the functional group reactive with the isocyanate group are those having a carboxyl group, a hydroxyl group or a hydroxyl group. Preferred examples of such polymerization initiator are azobiscyanovalerianic acid, peroxyoxalic acid or azobiscyanopentanol.

Examples of the chain transfer agent having the functional group reactive with the isocyanate group are those having a carboxyl group, a hydroxyl group or an amino group, Preferred examples of such chain transfer agent are thioglycolic acid, 2-mercaptoacetic acid or 2-aminoethanethiol.

Examples of the unsaturated monomer having the functional group reactive with the isocyanate group are those having an active hydrogen-containing group such as a carboxyl group, a hydroxyl group or an amino group.

Preferred examples of such monomer are acrylic acid, methacrylic acid, maleic acid, 2-hydroxyethyl acrylate, 2-hydroxyethyl methacrylate, 2-hydroxypropyl acrylate, 2-hydroxypropyl methacrylate, N-methylolacrylamide, N-methylolmethacrylamide or aminoethyl vinyl ether.

The repeating unit derived from the alkyl (meth)acrylate having 1 to 8 carbon atoms in the alkyl group which constitutes the backbone of the copolymer (b) are represented by the formula: 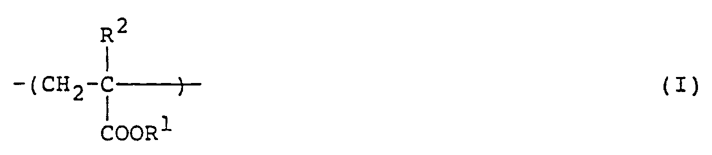
wherein R¹ is an alkyl group having 1 to 8 carbon atoms and R² is a hydrogen atom or a methyl group. The repeating unit derived from the alkyl (meth)acrylate having at least 10 carbon atoms in the alkyl group which constitutes the backbone of the copolymer (b) are represented by the formula: 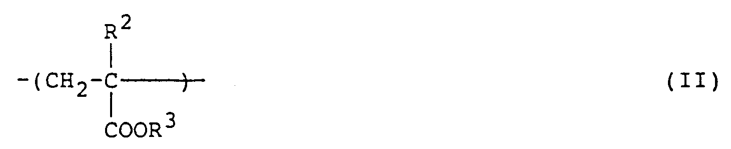
wherein R² is the same as defined above and R³ is an alkyl group having at least 10 carbon atoms.

R¹ in the formula (I) has preferably 1 to 4 carbon atoms, more preferably 1 or 2 carbon atoms. Preferred examples of R¹ are methyl, ethyl, propyl, n-butyl, tert.-butyl and 2-ethylhexyl. The alkyl groups R¹ in the repeating units (I) may be one kind of the alkyl group or two or more different kinds of the alkyl groups.

R³ in the formula (II) preferably has 10 to 30 carbon atoms, more preferably 10 to 20 carbon atoms. Preferred examples of R³ are lauryl, tridecyl, cetyl, stearyl, alkyl having 22 carbon atoms and behenyl. As in the case of R¹, the alkyl groups R³ in the formula (II) may be one kind of the alkyl group or two or more different kinds of the alkyl groups, for example, a combination of the C₁₂ alkyl groups and the C₁₃ alkyl groups.

The backbone of the copolymer (b) comprises the repeating units (I) and (II). In the present invention, the backbone of the copolymer (b) contains at least 50 % by weight, preferably at least 70 % by weight of the repeating units (I) and (II) based on the whole weight of the copolymer (b).

The weight ratio of the repeating units (I) to the repeating units (II) is from 95:5 to 40:60, preferably from 90:10 to 60:40. When this weight ratio is less than the above lower limit or higher than the above upper limit, the compatibility of the copolymer (b) with the polyoxyalkylene chains tends to decrease.

The copolymer (b) may comprise repeating units derived from at least one of monomers which are copolymerizable with the repeating units (I) and (II). Specific examples of such copolymerizable monomers are monomers having an amide group (e.g. acrylamide, methacrylamide, N-methylolacrylamide or N-methylolmethycrylamide. monomers having an epoxy group (e.g. glycidyl acrylate or glycidyl methacrylate), monomers having an amino group (e.g. diethylaminoethyl acrylate or diethylaminoethyl methacrylate), acrylonitrile, styrene, alpha-methylstyrene, alkyl vinyl ethers, vinyl chloride, vinyl acetate, vinyl propionate or ethylene.

The copolymer (b) has a number average molecular weight of 500 to 100,000, preferably 1,000 to 10,000 in view of easy handling.

By reacting such copolymer (b) with the organic diisocyanate, the acrylic isocyanate component (B) can be prepared. As the organic diisocyanate, those exemplified in connection with the polyoxyalkylene base isocyanate compound (A) may be used.

The weight ratio of the compound (A) to the copolymer (B) is from 5:95 to 95:5, preferably from 30:70 to 90:10, more preferably from 40:60 to 85:15 in view of the balance between the weather resistance and rubbery elasticity of the cured material.

As the curing agent (C), a mixture of the above described polyoxyalkylenepolyol having an average molecular weight of at least 1,000 and the copolymer (b) having an average molecular weight of at least 1,000. The weight ratio of the polyoxyalkylenepolyol and the copolymer (b) is from 5:95 to 95:5, preferably from 30:70 to 90:10, more preferably from 40:60 to 85:15 in view of the balance between the weather resistance and rubbery elasticity of the cured material.

The curable polymer composition of the present invention may contain a conventional used filler, plasticizer and/or curing catalyst, which are necessary in the sealant or the adhesive. If desired, the curable polymer composition may contain a pigment, a stabilizer, an fungicide, an antioxidant, a UV light absorber, an antiozonant or a thixotropic agent.

The filler may be any of the conventionally used ones which improve strength of the cured material and includes silica such as silica fine powder, calcium carbonate (e.g. heavy or light calcium carbonate or precipitated calcium carbonate), clay, talc, titanium oxide, zinc white, diatomaceous earth, barium sulfate, kaolin, aluminum silicate, magnesium oxide or carbon black. Among them, silica fine powder, preferably one having a particle size of 7 to 50 nm (a BET specific surface area of 50 to 380 m²/g) is preferred. Particularly preferred is hydrophobic silica the particle surfaces of which are treated, since it advantageously improves the mechanical strength of the cured material.

Specific examples of the plasticizer are dioctyl phthalate, butylbenzyl phthalate, chlorinated paraffin, epoxidized soybean oil or low molecular weight liquid polybutadiene.

Specific examples of the curing catalyst are organic metal compounds (e.g. dibutyltin dilaurate, monobutyltin oxide or dioctyltin dilaurate), amine derivatives (e.g. triethylenediamine, triethylenetetramine or diaminodiphenylmethane). The amount of the curing catalyst is from 0.01 to 5 parts by weight per 100 parts by weight of the isocyanate compound.

The curable polymer composition of the present invention may be used as an adhesive, a coating, a waterproofing material, a sealing agent, a templating material, a castable rubber material or a foaming material.

For example, when the curable polymer composition of the present invention is used as the sealing agent, the components (A) and (B) is mixed and kneaded with the curing catalyst and other optional components and stored in the sealed condition in the absence of moisture to give a one-pack type elastomeric sealing material which can be stored stably for a long time, and be cured quickly when exposed to the moisture to give a rubbery cured material having good weather resistance, transparency and tensile elongation.

When the curable composition of the present invention is prepared in the form of a two-pack type elastomeric sealing material, the components (A) and/or (B) are used as the primary component and the component (C) is used as the curing agent. Usually, the curing agent is used in such an amount that 0.7 to 1.1 equivalents of the functional group reactive with the isocyanate group are present per 2 equivalents of or the isocyanate group in the primary components. In use, the primary component and the curing agent are optionally mixed with the curing catalyst and other components and used as the sealant having good properties like the one-pack type one.

When the curable composition of the present invention is used as the coating, it has far larger tensile elongation and better weather resistance than the conventional ones so that it has good performances as a high-modulus coating for buildings, a primer for concrete constructions or a waterproof material.

When the curable composition of the present invention is used as the waterproof coating, it gives the water proof coating with good balance between strength at break and elongation. In addition, since it has good durability and water resistance, it suffers less blisters or peeling off.

When the curable composition of the present invention is used as the adhesive, it has excellent bond strength, particularly good balance between the peel strength and adhesive strength under shear so that it may be useful as a structural adhesive.

### PREFERRED EMBODIMENTS OF THE INVENTION

The present invention will be explained further in detail by following Examples, wherein "parts" are by weight unless otherwise indicated.

### Reference Example

In a mixture of butyl acrylate (61 parts), methyl methacrylate (14.5 parts), stearyl methacrylate (20 parts) and 2-hydroxyethyl methacrylate (2.5 parts), azobisisobutyronitrile (2.0 parts) was dissolved. Then, the resulting solution was dropwise added over 6 hours to xylene kept at 110°C while stirring followed by post-polymerization for 2 hours to obtain the copolymer (b).

The polymerization rate of this copolymer was 98 % and the copolymer had the number average molecular weight by GPC (converted to polystyrene) of 8,500 and 1.6 hydroxyl groups per molecule on the average.

To the copolymer (b) (30 parts of the solid content), polypropylene glycol having the molecular weight of 5,000 (70 parts) was added and homogeneously mixed, and then xylene was evaporated off with a rotary evaporator to obtain a solvent-free homogeneous viscous copolymer.

With the copolymer, calcium carbonate (150 parts), titanium dioxide (30 parts), dioctyl phthalate (40 parts), Disbalon 3600 N (main ingredients: polyether-ester type surfactants, manufactured by Kusumoto Chemical) (3 parts) and dibutyltin dilaurate (0.2 part) were kneaded by means of a three-roll mill to prepare a curing agent composition.

Then, the curing agent composition (500 parts) was compounded with the polyoxyalkylene base isocyanate component (100 parts) which was prepared by reacting polyoxyalkylenepolyol with the organic diisocyanate (Colonate 4095 manufactured by Nippon Polyurethane Industries. Content of the isocyanate group, 6 %) to prepared the curable polymer composition, from which a sheet form cured material having a thickness of 3 mm was produced.

According to the tensile test, the sheet had the strength at break or 17 kg/cm² and elongation at break of 570 %.

The same sheet form cured material was subjected to the accelerated weathering test with the Sunshine Weather-O-Meter. After 1,000 hours, no crack was formed on the surface of the sheet.

### Reference Comparative Example

In the same manner as Example 1 but using butyl acrylate (71 parts), methyl methacrylate (24.5 parts), 2-hydroxyethyl methacrylate (2.5 parts) and azobisisobutyronitrile (2.0 parts), a copolymer was prepared.

The polymerization rate of this copolymer was 98 % and the copolymer had the number average molecular weight by GPC (converted to polystyrene) of 8,200.

To the copolymer (30 parts of the solid content), polypropylene glycol having the molecular weight of 5,000 (70 parts) was added and mixed, and then xylene was evaporated off with a rotary evaporator. The copolymer was separated into two phases.

### Example

To the copolymer obtained in the Reference Example (40 parts) of solid content), polypropylene glycol having the molecular weight of 5,000 (60 parts) was added and homogeneously mixed. Then, to the mixture, 2,4-tolylene diisocyanate (5 parts) and dibutyltin dilaurate (0.2 part) were added and reacted at 60°C for 2 hours. Thereafter, xylene was evaporated off with the rotary evaporator to obtain a solvent-free homogeneous viscous copolymer composition.

The composition was cast to from a sheet having a thickness of 3 mm and kept standing at room temperature for 7 days to cure the composition with moisture in the air. Thereby, a transparent sheet was produced.

The sheet was subjected to the accelerated weathering test with the Sunshine Weather-O-Meter. After 500 hours, no melting was observed.

For comparison, polypropylene glycol having the molecular weight of 5,000 alone was reacted with 2,4-tolylene diisocyanate to prepare a cured sheet, and the sheet was subjected to the same accelerated weathering test. After 250 hours, it was melt.

## Claims (Claims for the following Contracting State(s): BE, CH, DE, FR, GB, IT, LI, NL, SE)

1. A one pack type moisture curable polymer composition, which comprises:
(A) a polyoxyalkylene base isocyanate compound having a terminal isocyanate group which compound is obtainable by reacting polyoxyalkylenepolyol with an organic diisocyanate; and
(B) a copolymer having at least one isocyanate group in a molecule on the average, the backbone of which copolymer comprises (1) repeating units derived from at least one monomer selected from alkyl acrylates and alkyl methacrylates represented by the formula: 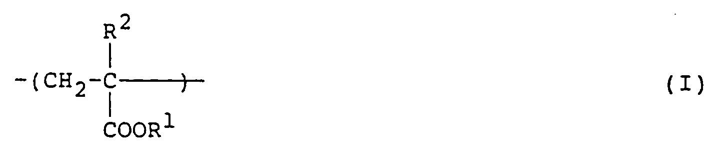 wherein R1 is an alkyl group having 1 to 8 carbon atoms and R2 is a hydrogen atom or a methyl group; and
(2) repeating units derived from at least one monomer selected from alkyl acrylates and alkyl methacrylates represented by the formula 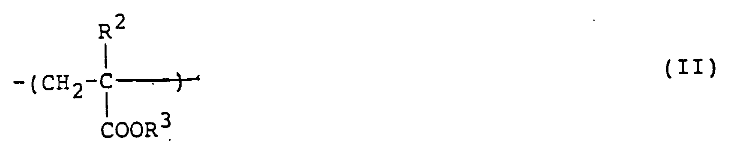 wherein R2 is the same as defined above and R3 is an alkyl group having at least 10 carbon atoms; and
(3) optionally repeating units derived from at least one of monomers which are copolymerizable with the repeating units (1) and (2), wherein at least 50% by weight of the repeating units (I) and (II), based on the whole weight of said copolymer, are contained and wherein the weight ratio of the repeating units (I) to the repeating units (II) is from 95:5 to 40:60, wherein the weight ratio of the compound (A) to the compound (B) is from 5:95 to 95:5.

2. A polymer composition as claimed in claim 1, which additionally comprises:
(C) a curing agent comprising:
(i) polyoxyalkylenepolyol having an average molecular weight of at least 1000; and
(ii) a copolymer which has at least one functional group reactive with an isocyanate group in a molecule on the average and an average molecular weight of at least 1000 and a backbone which comprises the repeating units (1) and (2) as defined in claim 1.

## Claims (Claims for the following Contracting State(s): ES)

1. A process for preparing a one-pack type moisture curable polymer composition, which comprises:
(A) a polyoxyalkylene base isocyanate compound having a terminal isocyanate group which compound is obtainable by reacting polyoxyalkylenepolyol with an organic diisocyanate; and
(B) a copolymer having at least one isocyanate group in a molecule on the average, the backbone of which copolymer comprises (1) repeating units derived from at least one monomer selected from alkyl acrylates and alkyl methacrylates represented by the formula: 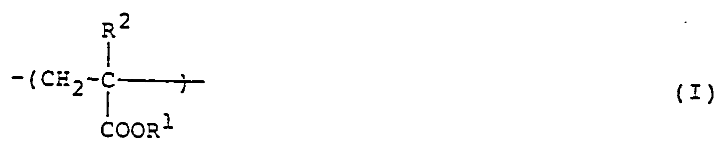 wherein R1 is an alkyl group having 1 to 8 carbon atoms and R2 is a hydrogen atom or a methyl group; and
(2) repeating units derived from at least one monomer selected from alkyl acrylates and alkyl methacrylates represented by the formula 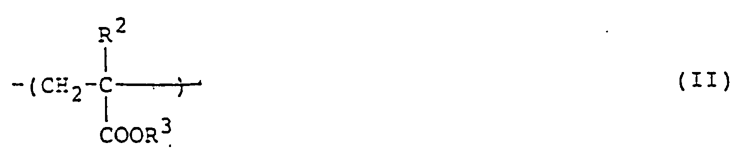 wherein R2 is the same as defined above and R3 is an alkyl group having at least 10 carbon atoms; and
(3) optionally repeating units derived from at least one of monomers which are copolymerizable with the repeating units (1) and (2), wherein at least 50% by weight of the repeating units (I) and (II), based on the whole weight of said copolymer, are contained and wherein the weight ratio of the repeating units (I) to the repeating units (II) is from 95:5 to 40:60, which comprises combining the compound (A) with the compound (B) in a weight ratio of the compound (A) to the compound (B) from 5:95 to 95:5.

2. A process as claimed in claim 1, which additionally comprises the addition of
(C) a curing agent comprising:
(i) polyoxyalkylenepolyol having an average molecular weight of at least 1000; and
(ii) a copolymer which has at least one functional group reactive with an isocyanate group in a molecule on the average and an average molecular weight of at least 1000 and a backbone which comprises the repeating units (1) and (2) as defined in claim 1.

3. A one pack type moisture curable polymer composition, which comprises:
(A) a polyoxyalkylene base isocyanate compound having a terminal isocyanate group which compound is obtainable by reacting polyoxyalkylenepolyol with an organic diisocyanate; and
(B) a copolymer having at least one isocyanate group in a molecule on the average, the backbone of which copolymer comprises (1) repeating units derived from at least one monomer selected from alkyl acrylates and alkyl methacrylates represented by the formula: 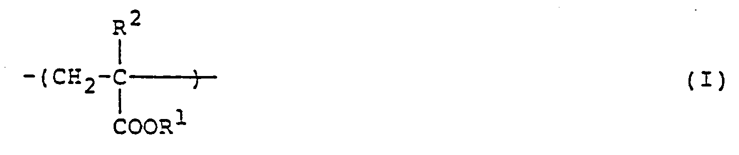 wherein R1 is an alkyl group having 1 to 8 carbon atoms and R2 is a hydrogen atom or a methyl group; and
(2) repeating units derived from at least one monomer selected from alkyl acrylates and alkyl methacrylates represented by the formula 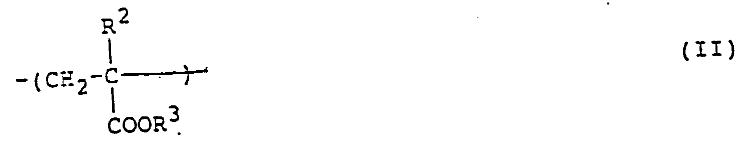 wherein R2 is the same as defined above and R3 is an alkyl group having at least 10 carbon atoms; and
(3) optionally repeating units derived from at least one of monomers which are copolymerizable with the repeating units (1) and (2), wherein at least 50% by weight of the repeating units (I) and (II), based on the whole weight of said copolymer, are contained and wherein the weight ratio of the repeating units (I) to the repeating units (II) is from 95:5 to 40:60, wherein the weight ratio of the compound (A) to the compound (B) is from 5:95 to 95:5.

4. A polymer composition as claimed in claim 3 which additionally comprises:
(C) a curing agent comprising:
(i) polyoxyalkylenepolyol having an average molecular weight of at least 1000; and
(ii) a copolymer which has at least one functional group reactive with an isocyanate group in a molecule on the average and an average molecular weight of at least 1000 and a backbone which comprises the repeating units (1) and (2) as defined in claim 3.

## Patentansprüche (Patentansprüche für folgende(n) Vertragsstaat(en): BE, CH, DE, FR, GB, IT, LI, NL, SE)

1. Durch Feuchtigkeit härtbare Polymerzusammensetzung vom Einzel-Packungstyp, umfassend:
(A) eine Isocyanatverbindung auf Polyoxyalkylenbasis mit einer terminalen Isocyanatgruppe, wobei die Verbindung durch Reaktion von Polyoxyalkylenpolyol mit einem organischen Diisocyanat erhältlich ist; und
(B) ein Copolymer mit zumindest einer Isocyanatgruppe im Durchschnitt in einem Molekül, wobei das Rückgrat des Copolymers (1) Wiederholungseinheiten, die sich von zumindest einem Monomer ableiten, ausgewählt aus Alkylacrylaten und Alkylmethacrylaten, dargestellt durch die Formel: 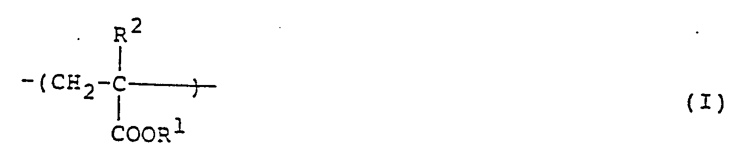 worin R1 eine Alkylgruppe mit 1 bis 8 Kohlenstoffatomen ist und worin R2 ein Wasserstoffatom oder eine Methylgruppe ist; und
(2) Wiederholungseinheiten, die sich von zumindest einem Monomer ableiten, ausgewählt aus Alkylacrylaten und Alkylmethacrylaten, dargestellt durch die Formel 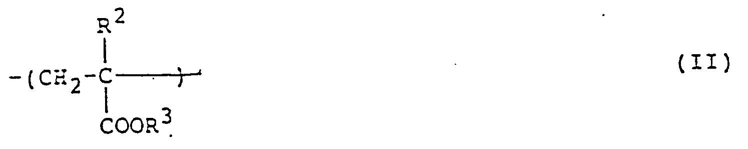 worin R2 die gleiche Bedeutung hat wie oben definiert und worin R3 eine Alkylgruppe mit wenigstens 10 Kohlenstoffatomen ist; und
(3) wahlweise Wiederholungseinheiten umfasst, die sich von zumindest einem Monomer ableiten, die mit den Wiederholungseinheiten (1) und (2) copolymerisierbar sind, worin zumindest 50 Gew.% der Wiederholungseinheiten (I) und (II), bezogen auf das Gesamtgewicht des Copolymers, enthalten sind und worin das Gewichtsverhältnis der Wiederholungseinheiten (I) zu den Wiederholungseinheiten (II) von 95:5 bis 40:60 ist, worin das Gewichtsverhältnis der Verbindung (A) zu der Verbindung (B) von 5:95 bis 95:5 ist.

2. Polymerzusammensetzung nach Anspruch 1, die zusätzlich umfaßt:
(C) ein Aushärtmittel, umfassend:
(i) Polyoxyalkylenpolyol mit einem durchschnittlichen Molekulargewicht von wenigstens 1000; und
(ii) ein Copolymer, das zumindest eine funktionelle Gruppe, die mit einer Isocyanatgruppe reaktiv ist, im Durchschnitt in einem Molekül hat und das ein durchschnittliches Molekulargewicht von wenigstens 1000 und ein Rückgrat hat, das die Wiederholungseinheiten (1) und (2), wie in Anspruch 1 definiert, umfaßt.

## Patentansprüche (Patentansprüche für folgende(n) Vertragsstaat(en): ES)

1. Verfahren zur Herstellung einer durch Feuchtigkeit härtbaren Polymerzusammensetzung vom Einzel-Packungstyp, umfassend:
(A) eine Isocyanatverbindung auf Polyoxyalkylenbasis mit einer terminalen Isocyanatgruppe, wobei die Verbindung durch Reaktion von Polyoxyalkylenpolyol mit einem organischen Diisocyanat erhältlich ist; und
(B) ein Copolymer mit zumindest einer Isocyanatgruppe im Durchschnitt in einem Molekül, wobei das Rückgrat des Copolymers (1) Wiederholungseinheiten, die sich von zumindest einem Monomer ableiten, ausgewählt aus Alkylacrylaten und Alkylmethacrylaten, dargestellt durch die Formel: 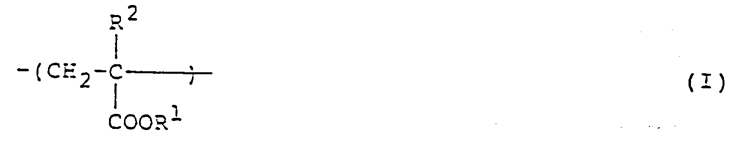 worin R1 eine Alkylgruppe mit 1 bis 8 Kohlenstoffatomen ist und worin R2 ein Wasserstoffatom oder eine Methylgruppe ist; und
(2) Wiederholungseinheiten, die sich von zumindest einem Monomer ableiten, ausgewählt aus Alkylacrylaten und Alkylmethacrylaten, dargestellt durch die Formel 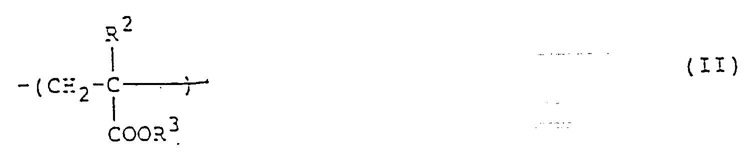 worin R2 die gleiche Bedeutung hat wie oben definiert und worin R3 eine Alkylgruppe mit wenigstens 10 Kohlenstoffatomen ist; und
(3) wahlweise Wiederholungseinheiten umfasst, die sich von zumindest einem Monomer ableiten, die mit dem Wiederholungseinheiten (1) und (2) copolymerisierbar sind, worin zumindest 50 Gew.% der Wiederholungseinheiten (I) und (II), bezogen auf das Gesamtgewicht des Copolymers, enthalten sind und worin das Gewichtsverhältnis der Wiederholungseinheiten (I) zu den Wiederholungseinheiten (II) von 95:5 bis 40:60 ist, umfassend das Kombinieren der Verbindung (A) mit der Verbindung (B) in einem Gewichtsverhältnis der Verbindung (A) zu der Verbindung (B) von 5:95 bis 95:5.

2. Verfahren nach Anspruch 1, das zusätzlich die Zugabe von
(C) einem Aushärtmittel umfaßt, enthaltend:
(i) Polyoxyalkylenpolyol mit einem durchschnittlichen Molekulargewicht von wenigstens 1000; und
(ii) ein Copolymer, das zumindest eine funktionelle Gruppe, die mit einer Isocyanatgruppe reaktiv ist, im Durchschnitt in einem Molekul hat und das ein durchschnittliches Molekulargewicht von wenigstens 1000 und ein Rückgrat hat, das die Wiederholungseinheiten (1) und (2) wie in Anspruch 1 definiert, umfaßt.

3. Durch Feuchtigkeit härtbare Polymerzusammensetzung vom Einzel-Packungstyp, umfassend:
(A) eine Isocyanatverbindung auf Polyoxyalkylenbasis mit einer terminalen Isocyanatgruppe, wobei die Verbindung durch Reaktion von Polyoxyalkylenpolyol mit einem organischen Diisocyanat erhältlich ist; und
(B) ein Copolymer mit zumindest einer Isocyanatgruppe im Durchschnitt in einem Molekül, wobei das Rückgrat des Copolymers (1) Wiederholungseinheiten, die sich von zumindest einem Monomer ableiten, ausgewählt aus Alkylacrylaten und Alkylmethacrylaten, dargestellt durch die Formel: 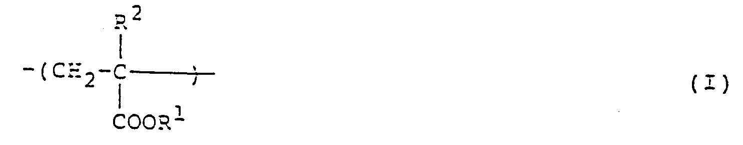 worin R1 eine Alkylgruppe mit 1 bis 8 Kohlenstoffatomen ist und worin R2 ein Wasserstoffatom oder eine Methylgruppe ist; und
(2) Wiederholungseinheiten, die sich von zumindest einem Monomer ableiten, ausgewählt aus Alkylacrylaten und Alkylmethacrylaten, dargestellt durch die Formel 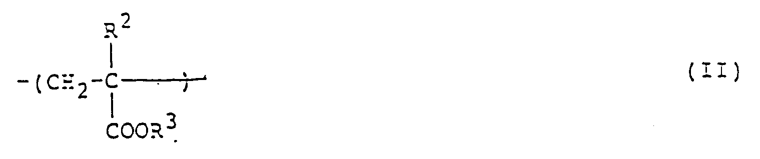 worin R2 die gleiche Bedeutung hat wie oben definiert und worin R3 eine Alkylgruppe mit wenigstens 10 Kohlenstoffatomen ist; und
(3) wahlweise Wiederholungseinheiten umfasst, die sich von zumindest einem Monomer ableiten, die mit dem Wiederholungseinheiten (1) und (2) copolymerisierbar sind, worin zumindest 50 Gew.% der Wiederholungseinheiten (I) und (II), bezogen auf das Gesamtgewicht des Copolymers, enthalten sind und worin das Gewichtsverhältnis der Wiederholungseinheiten (I) zu den Wiederholungseinheiten (II) von 95:5 bis 40:60 ist, worin das Gewichtsverhältnis der Verbindung (A) zu der Verbindung (B) von 5:95 bis 95:5 ist.

4. Polymerzusammensetzung nach Anspruch 3, die zusätzlich umfaßt:
(C) ein Aushärtmittel, umfassend:
(i) Polyoxyalkylenpolyol mit einem durchschnittlichen Molekulargewicht von wenigstens 1000; und
(ii) ein Copolymer, das zumindest eine funktionelle Gruppe, die mit einer Isocyanatgruppe reaktiv ist, im Durchschnitt in einem Molekül hat und das ein durchschnittliches Molekulargewicht von wenigstens 1000 und ein Rückgrat hat, das die Wiederholungseinheiten (1) und (2), wie in Anspruch 3 definiert, umfaßt.

## Revendications (Revendications pour l'(les) Etat(s) contractant(s) suivant(s): BE, CH, DE, FR, GB, IT, LI, NL, SE)

1. Composition polymérique réticulable à l'humidité sous conditionnement unique qui comprend:
(A) un composé isocyanate à base de polyoxyalkylène ayant un groupe isocyanate terminal, ce composé pouvant être obtenu par réaction d'un polyoxyalkylène polyol avec un diisocyanate organique; et
(B) un copolymère ayant au moins un groupe isocyanate en moyenne par molécule, la structure du squelette de ce copolymère comprenant (1) des unités répétitives dérivées d'au moins un monomère choisi parmi les acrylates d'alkyle et les méthacrylates d'alkyle représentés par la formule : 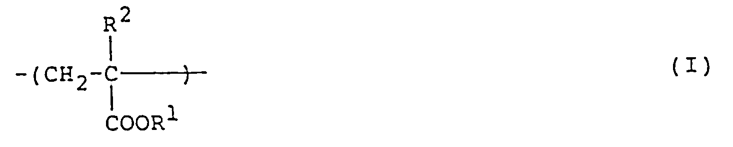 dans laquelle R¹ est un groupe alkyle ayant de 1 à 8 atomes de carbone et R² est un atome d'hydrogène ou un groupe méthyle; et
(2) des unités répétitives dérivées d'au moins un monomère choisi parmi les acrylates d'alkyle et les méthacrylates d'alkyle représentés par la formule : 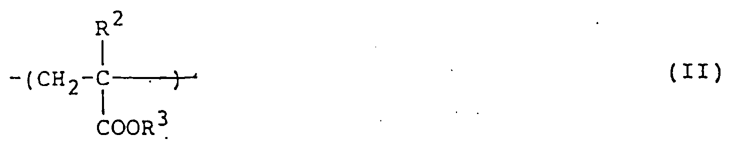 dans laquelle R² est tel que défini ci-dessus, et R³ est un groupe alkyle ayant au moins 10 atomes de carbone; et
(3) éventuellement des unités répétitives dérivées d'au moins un des monomères qui sont copolymérisables avec les unités répétitives (1) et (2), copolyméré dans lequel au moins 50 % en poids des unités répétitives (I) et (II), sont présents par rapport au poids total dudit copolymère et dans lequel le rapport en poids des unités répétitives (I) aux unités répétitives (II) est compris entre 95:5 et 40:60, le rapport en poids du composé (A) au composé (B) étant compris entre 5:95 et 95:5.

2. Composition polymérique selon la revendication 1, qui en outre contient :
(C) un agent de réticulation comprenant:
(i) un polyoxyalkylène polyol ayant un poids moléculaire moyen d'au moins 1000; et
(ii) un copolymère ayant au moins un groupe fonctionnel pouvant réagir avec un groupe isocyanate en moyenne par molécule et un poids moléculaire moyen d'au moins 1000, et une structure de squelette qui comprend les unités répétitives (1) et (2), telles que définies à la revendication 1

## Revendications (Revendications pour l'(les) Etat(s) contractant(s) suivant(s): suviant : ES)

1. Procédé pour la préparation d'une composition polymérique réticulable à l'humidité sous conditionnement unique qui comprend:
(A) un composé isocyanate à base de polyoxyalkylène ayant un groupe isocyanate terminal, ce composé pouvant être obtenu par réaction d'un polyoxyalkylène polyol avec un diisocyanate organique; et
(B) un copolymère ayant au moins un groupe isocyanate en moyenne par molécule, la structure du squelette de ce copolymère comprenant (1) des unités répétitives dérivées d'au moins un monomère choisi parmi les acrylates d'alkyle et les méthacrylates d'alkyle représentés par la formule : 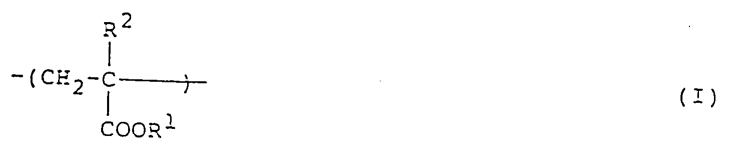 dans laquelle R¹ est un groupe alkyle ayant de 1 à 8 atomes de carbone et R² est un atome d'hydrogène ou un groupe méthyle; et
(2) des unités répétitives dérivées d'au moins un monomère choisi parmi les acrylates d'alkyle et les méthacrylates d'alkyle représentés par la formule : 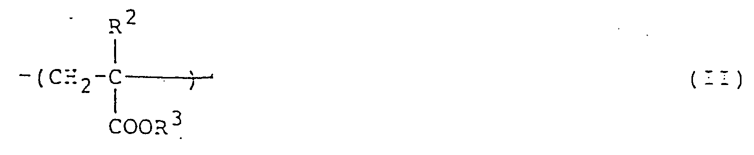 dans laquelle R² est tel que défini ci-dessus et R³ est un groupe alkyle ayant au moins 10 atomes de carbone; et
(3) éventuellement des unités répétitives dérivées d'au moins un des monomères qui sont copolymérisables avec les unités répétitives (1) et (2), copolymère dans lequel au moins 50 % en poids des unités répétitives (I) et (II), sont présentes par rapport au poids total dudit copolymère et dans lequel le rapport en poids des unités répétitives (I) sur les unités répétitives (II) est compris entre 95:5 et 40:60, ledit procédé consistant à associer le composé (A) au composé (B) dans un rapport en poids du composé (A) au composé (B) de 5:95 à 95:5.

2. Procédé selon la revendication 1, qui en outre comprend l'addition
(C) d'un agent de réticulation comprenant:
(i) un polyoxyalkylène polyol ayant un poids moléculaire moyen d'au moins 1000; et
(ii) un copolymère ayant au moins un groupe fonctionnel pouvant réagir avec un groupe isocyanate en moyenne par molécule et un poids moléculaire moyen d'au moins 1000, et une structure de squelette qui comprend les unités répétitives (1) et (2), telles que définies à la revendication 1.

3. Composition polymérique réticulable à l'humidité sous conditionnement unique qui comprend:
(A) un composé isocyanate à base de polyoxyalkylène ayant un groupe isocyanate terminal, ce composé pouvant être obtenu par réaction d'un polyoxyalkylène polyol avec un diisocyanate organique; et
(B) un copolymère ayant au moins un groupe isocyanate en moyenne par molécule, la structure du squelette de ce copolymère comprenant (1) des unités répétitives dérivées d'au moins un monomère choisi parmi les acrylates d'alkyle et les méthacrylates d'alkylie représentés par la formule: 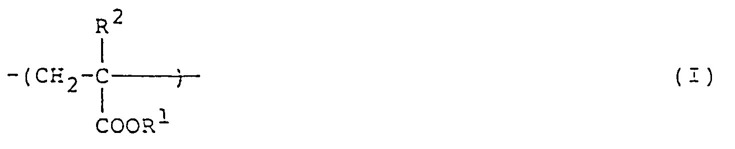 dans laquelle R¹ est un groupe alkyle ayant 1 à 8 atomes de carbone et R² est un atome d'hydrogène ou un groupe méthyle; et
(2) des unités répétitives dérivées d'au moins un monomère choisi parmi les acrylates d'alkyle et les méthacrylates d'alkyle représentés par la formule: 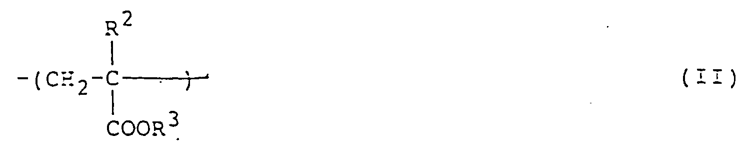 dans laquelle R² est tel que défini ci-dessus et R³ est un groupe alkyle ayant au moins 10 atomes de carbone; et
(3) éventuellement des unités répétitives dérivées d'au moins un des monomères qui sont copolymérisables avec les unités répétitives (1) et (2), copolymère dans lequel au moins 50 % en poids des unités répétitives (I) et (II), sont présents par rapport au poids total dudit copolymère et où le rapport en poids des unités répétitives (I) aux unités répétitives (II) est compris entre 95:5 et 40:60, le rapport en poids du composé (A) au composé (B) étant compris entre 5:95 et 95:5.

4. Composition polymérique selon la revendication 3, qui en outre contient :
(C) un agent de réticulation comprenant:
(i) un polyoxyalkylène polyol ayant un poids moléculaire moyen d'au moins 1000; et
(ii) un copolymère ayant au moins un groupe fonctionnel pouvant réagir avec un groupe isocyanate en moyenne par molécule et un poids moléculaire moyen d'au moins 1000, et une structure de squelette qui comprend les unités répétitives (1) et (2), telles que définies à la revendication 3.
